# EUROPEAN PATENT SPECIFICATION

(11) **EP 1 045 187 B1**
(45) Date of publication and mention of the grant of the patent: **13.09.2006**
(21) Application number: 00500070.8
(22) Date of filing: 14.04.2000
(51) Int. Cl.: F16L 33/02

(54) **An integrated system for conducting fluids**
Integrierte Vorrichtung zur Führung von Fluiden
Système pour la conduite des fluides

(30) Priority: 15.04.1999 BR 9901719
(43) Date of publication of application: 18.10.2000
(73) Proprietor: Sabo Industria e Comércio Ltda., Sao Paulo SP. CEP 05036-001 (BR)
(72) Inventor: Sabo, D. Alfredo Miguel, Sao Paulo Sp. Cep 05036-001 (BR)
(74) Representative: Ferreira Magno, Fernando Antonio

(56) References cited:
- EP-A- 0 508 410
- EP-A- 0 631 080
- US-A- 5 002 094
- US-A- 5 145 218

## Description

This description refers to an apparatus for conducting fluids, particularly applied in the field of spare parts, which was perfected to provide improved use and development over similar traditional systems.

As is already known, refrigerating systems for motors, brakes, air collection and other automotive vehicle components include, amongst others, hose circuits used to circulate cooling liquid, brake fluid, air and others. These hose circuits essentially consist of hoses for circulating fluid, as well as a clamp used to grip hoses in operating premises.

A more traditional solution consisted of providing final users with hoses and clamps separately one from the other, i.e. vehicle assemblers and/or spare parts manufacturers (or others).

This type of supply entailed several problems for final users, such as the need to manage procedures (i.e. sale, quality control, storage, stock control and others) related to the hose and clamps as separate items.

This hose circuit supply also hindered the vehicle assembly line and/or any vehicle sub-systems using hoses, since clamps needed to be mounted on the hose, the unit required assembly at the operating premises, and procedures for adequate adjustment and clamp fixing were necessary. Taking into account that vehicles and/or some vehicle sub-systems may contain a large number of hose circuits that are often located in inaccessible premises, this could result in an allocation of extra time, greater difficulty, more possible defects and other inconveniences along the assembly line.

Another problem resulting from the supply of hoses and clamps unassembled separately regarded repair or maintenance carried out in mechanical workshops. This was due to the fact these components eventually had insufficient resources to produce technically satisfactory work and resulted in defective assembly which hindered vehicles and/or vehicle sub-systems.

Consequently, such hoses and clamps recently started being supplied to final users as integrated systems made up of hoses and applicable clamps, already assembled, positioned and adequately attached one to the other at the hose factory. This benefits final users since instead of several items, a single item made up of pre-assembled hoses and clamp (s) may be subject to management procedures along the assembly line. Another advantage provided by this integrated system is the fact it is reliable and requires less time since the hose and clamp are assembled and positioned along the vehicle and/or vehicle sub-system assembly line. In any case, this hose supply including clamps benefits repair and maintenance services by providing technically adequate assembly, even for mechanical workshops not fitted with all the necessary resources.

By using a more diffuse method to obtain these integrated systems, hoses and previously opened clamps are previously assembled, positioned and fixed one to the other with adhesive.

It so happens that this adhesive has proved to be inadequate to withstand the pressure to which integrated hose and clamp systems may be subject throughout storage and/or transportation and/or assembly procedures in operating premises. It is not unusual for the adhesive to break and for clamps to fall apart from the hose, in which case any possible advantages provided by these integrated systems are lost and hose manufacturers are forced to " re-do" their work, i.e. re-assemble, reposition and re-fix the hose and clamps for final product users, vehicle assemblers and/or spare parts factories and/or others.

US-A-5 002 094 discloses an apparatus for conducting fluids, which comprises the features of the preamble of claim 1.

The purpose of this invention is to provide an improved apparatus for conducting fluids, overcoming the problems derived from similar traditional systems, the construction, operation and advantages of the improved apparatus are hereinafter described and based on the drawings enclosed:

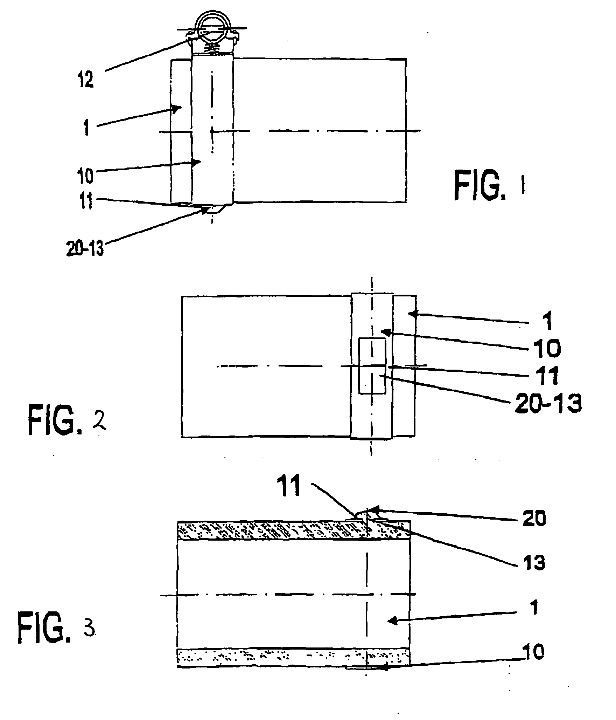

Figure 1 shows a 90°-lateral view from below of a strip of hose according to this invention;
Figure 2 shows a lateral view according to Figure 1, where the area for incorporating the damp to the hose is seen at level surface; and
Figure 3 is a sectional view according to Figures 1 and 2.

According to the present invention, the apparatus for conducting fluids, is especially, though not exclusively, applied to the auto industry, and is essentially composed of the following: an elastomeric hose (1) through which conducting fluid circulates; an open clamp (10) with a fixing strip (11), for fixing to the hose (1) and means (13, 20) for mechanically anchoring the clamp (10) to the hose (1) to provide a tight fitting, so that relative movement between the hose (1) and the clamp (10) is impeded longitudinally, angularly and radially. The fixing strip (11) extends around the outer circumference of the hose (1). The means (13, 20) for mechanically anchoring the clamp to the hose comprises at least one perforation (13) in the fixing strip (11) and an elastomeric plate (20) having a width in the longitudinal direction of the hose (1) greater than the width of the perforation (13) in the same direction, the radially inward side of the elastomeric plate (20) having a portion extending through the at least one perforation (13), said portion being vulcanised to the hose surface.

The elastomeric plate (20) does not extend beyond the edges of the fixing strip (11) such that the point of attachment to the hose (1) is formed by the vulcanised portion extending through the perforation (13).

As a result, the apparatus is delivered to the final user as fully mounted, with open clamps, and assembly at operating premises being simply done by adjusting the hose ends to the receiving hose mouths and squeezing the clamp(s) until the unit is adequately fixed.

This way of constructing the apparatus for conducting fluids eliminates the inconveniences of traditional systems (using adhesive to incorporate components, as stated above), from the moment this construction joins components so as to withstand any pressure to which the system is subject, whether during transport, storage, assembly or use.

In this way, by constructing the present apparatus for conducting fluids, standard system advantages are maintained, regardless of assembly, positioning and fixing of the hose and open clamp(s) carried out at the hose factory, so that final users may assemble the system directly at the operating premises with requiring prior component assembly and positioning.

Within the basic idea described above, it is hereby claimed that the perfected system covered by the present patent of invention may reveal differences regarding materials, size and construction details without escaping the scope of protection applied for.

The hose (1) is elastomeric and may be of any type normally used, including a single or reinforced wall, made up by a single hose unit including any necessary configuration or made up of a derived unit, or others.

The clamp (10) may be of any type normally used, such as screw-type, zipper-type or spring-type or any other adequate types made of materials able to withstand the pressure to which the clamp is subject, as well as the vulcanisation process (metal is preferred).

This apparatus may be of any size, depending on its purpose.

It may be applied in the auto industry to many different vehicle sub-systems or motors that use hose circuits, or for any other type of use requiring fluid conduction.

## Claims

1. An apparatus for conducting fluids composed of:
- an elastomeric hose (1),
- an open clamp (10) with a fixing strip (11), for fixing to the hose (1) and
- means (13, 20) for mechanically anchoring the clamp (10) to the hose (1) to provide a tight fitting, so that relative movement between the hose (1) and the clamp (10) is impeded longitudinally, angularly and radially,
- the fixing strip (11) extending around the outer circumference of the hose (1),
- the means (13, 20) for mechanically anchoring the damp to the hose comprising at least one perforation (13) in the fixing strip (11) and
- an elastomeric plate (20) having a width in the longitudinal direction of the hose (1) greater than the width of the perforation (13) in the same direction, the radially inward side of the elastomeric plate (20) having a portion extending through the at least one perforation (13), said portion being vulcanised to the hose surface, **characterised in that**
- the elastomeric plate (20) does not extend beyond the edges of the fixing strip (11) such that the point of attachment to the hose (1) is formed by the vulcanised portion extending through the perforation (13).

## Patentansprüche

1. Vorrichtung zur Leitung von Flüssigkeit, bestehend:
- aus einem aus elastomerem Material gebildeten Schlauch (1);
- aus einer offenen Schelle (10) mit einem Befestigungsband (1) zur Fixierung am Schlauch (1), und
- aus Mitteln (13, 20) zur mechanischen Befestigung der Schelle (10) auf dem Schlauch (1), mit dem Ziel, eine feste Passung zu ermöglichen, so dass eine Relativbewegung zwischen Schlauch (1) und Schelle (10) sowohl in Längs- und Winkelrichtung als auch in axialer Richtung verunmöglicht wird, und
- aus dem Befestigungsband (11), das sich um den Außenumfang des Schlauches erstreckt (1);
- wobei die Mittel (13, 20) für die mechanische Fixierung auf dem Schlauch zumindest eine Bohrung (13) im Befestigungsband (11) umfasst, und
- die Platte aus elastomerem Material (20) in Längsrichtung des Schlauchs (1) eine Breite besitzt, die größer ist als die Breite der Bohrung (13) in der selben Richtung, wobei die radial innere Seite der elastomeren Platte (20) einen Teil aufweist, der sich durch wenigstens eine Bohrung (13) hindurch erstreckt, wobei der besagte Teil auf der Oberfläche des Schlauch vulkanisiert ist:
**dadurch gekennzeichnet, dass** die elastomere Platte (20) sich nicht über die Ränder des Befestigungsbands (11) hinaus erstreckt, so dass die Einspannstelle des Schlauches (1) vom vulkanisierten Teil gebildet wird, der sich durch die Bohrung (13) hindurch erstreckt.

## Revendications

1. Un dispositif pour la conduite de fluides composé par:
- un tuyau en élastomère (1);
- un brassard ouvert (10), avec une bande de fixation (1) pour la fixation au tuyau (1); et
- des moyens (13, 20) pour l'ancrage mécanique du brassard (10) sur le tuyau (1), pour proportionner un ajustage ferme, afin que le mouvement relatif entre le tuyau (1) et le brassard (10) est empêché longitudinalement, angulairement et radialement;
- la bande de fixation (11), qui se prolonge autour de la périphérie extérieure du tuyau (1);
- les moyens (13, 20) pour l'ancrage mécanique du brassard sur le tuyau, comprenant au moins un alésage (13) sur la bande de fixation (11); et
- la plaque en élastomère (20) ayant un largeur dans la direction longitudinale du tuyau (1) plus grande que la largeur de l'alésage (13) dans la même direction, le coté radialement intérieur de la plaque en élastomère (20) ayant une portion qui se prolonge en travers d'au moins, un alésage (13), la dite portion vulcanisée étant à la surface du tuyau, **caractérisé en ce que**:
- la plaque en élastomère (20) ne se prolonge pas au-delà des bords de la bande de fixation (11) de telle façon que le point de fixation pour le tuyau (1) est formé par la portion vulcanisée qui se prolonge en travers de l'alésage (13).
